# EUROPEAN PATENT SPECIFICATION

(11) **EP 1 238 234 B1**
(45) Date of publication and mention of the grant of the patent: **03.09.2008**
(21) Application number: 00985542.0
(22) Date of filing: 12.12.2000
(51) Int. Cl.: F24J 3/08

(54) **GROUND ENERGY TRANSFER SYSTEM AND METHOD**
ERDWÄRMEÜBERTRAGUNGSSYSTEM UND VERFAHREN
SYSTEME DE TRANSFERT D'ENERGIE GEOTHERMIQUE ET PROCEDE

(30) Priority: 12.12.1999 US 459416; 01.06.2000 US 585311
(43) Date of publication of application: 11.09.2002
(73) Proprietor: Enlink Geoenergy Services, Inc., Houston, TX 77094 (US)
(72) Inventor: AMERMAN, Thomas, Robert, Houston, TX 77094 (US); JOHNSON, Howard, Edwin, Jr., Kennesaw, GA 30144 (US)
(74) Representative: Lucas, Brian Ronald
(86) International application number: PCT/GB2000/004753
(87) International publication number: WO 2001/042721

(56) References cited:
- WO-A-99/63282
- FR-A- 2 441 840
- US-A- 4 306 293
- PATENT ABSTRACTS OF JAPAN vol. 010, no. 115 (M-474), 30 April 1986 (1986-04-30) -& JP 60 245955 A (MATSUSHITA DENKI SANGYO KK), 5 December 1985 (1985-12-05)

## Description

The present invention relates to a ground energy transfer system and to a method of transferring heat between a relatively constant temperature portion of the earth and a building.

The outstanding efficiency of closed loop ground source heat pumps is well known. Such closed loop ground source heat exchange systems are disclosed in PCT Publication Numbers WO 97/10480 and WO 99/63282. In a typical system, for each unit of energy purchased from an electric utility to operate the system, 4 units of energy are extracted from or put into the earth in the form of heat. In order to exchange this heat with the earth, a closed loop pipe or series of closed loop pipes are buried in the ground. A heat exchange fluid is circulated through this buried pipe system. If a difference exists between the temperature of the fluid circulating in the pipe and the earth temperature, an exchange of heat occurs - primarily by conduction through the wall of the pipe. If the system is operating in the heating mode, heat is taken from the fluid inside of this circulating loop by a heat exchanger in the heat pump equipment. As this relatively cool water, for example 1°C (35°F) is circulated back through the relatively warm earth, for example 18°C (65°F) heat is transferred into the fluid, which is subsequently taken from this stream as it continues to circulate through the heat pump's heat exchanger. Similarly, if the system is operating in the cooling mode, the heat pump's heat exchanger puts heat into this circulating fluid. Then, as this relatively warm fluid, for example 38°C (100°F) is circulated through the relatively cool earth, for example 18°C (65°F), heat is given up to the earth and the relative cool fluid is circulated back to the heat pump to absorb more heat - and the process so continues. Because of its mass, the earth stays at a relatively constant temperature, providing a virtual limitless resource as a heat supplier and heat sink.

One reason ground source heat pumps have not been more widely used in the past is because of the expense involved in the design and installation of the circulating fluid pipe loop, which must be buried in the ground. Many complex geological and installation parameters determine the rate of heat transfer between this buried heat exchanger and the earth and, subsequently, the operational performance and efficiency of the heat pump system. The uncertainty of the installation costs coupled with the uncertainty of the resulting operating efficiencies have made it difficult for a customer to predict the operating costs and the financial payback associated with installing a ground source heat pump system.

The present inventors have recognized that by having an independent company design, install, and own the ground heat exchange system or the ground loop, the uncertainty of installation costs and heat transfer is removed (from the customer's viewpoint). Now, the customer simply "buys" kWh of energy from the ground system provider. The present inventors have recognized that the ground system is an on-site power plant and that by the placement of an energy meter on the ground system, the precise amount of energy being transferred to and from the earth can be determined and sold to a customer in the form of kWh, exactly like the customer purchases power from an electric utility company. With such a new method and system, as recognized by the present inventors, the customer, by adding the cost of the power supplied by the electric company to the power supplied by the ground system owner, may accurately evaluate the cost and return on investment of the ground source heat pump system compared to alternative heating and cooling systems.

Several companies in the past have produced "energy meters" that calculate and record energy extracted from a circulating water loop and bill the customer for the energy used. This has been done for many years in "district heating" applications in Europe. Such equipment only records heat flow in one direction - usually heat extracted from the flow stream, not heat rejected into the flow stream as would be the case in a heat pump in a cooling mode (air conditioning operation).

The prior art discloses numerous in-ground heat exchanger systems (for example see U.S. Patents 5,244,037; 5,261,251); and grouting systems (see, for example U.S. Patent 5,435,387).

FR-A-2 496 857 discloses an hydraulic module for controlling the return temperature of hot water drawn from a geothermal heat source for maximum efficiency. In another embodiment, a number of the hydraulic modules are used for metering energy supplied by a single conventional boiler to a number of different apartments in the same building.

JP 60-245955 discloses a control device for an apparatus that utilises geothermal heat. The control device stores data representing an estimated temperature distribution around a pipe and of the temperature at the pipe wall. The estimated temperature data is used in conjunction with measured temperatures at an inlet and outlet of the pipe to take a control decision whether or not to operate a fan to draw air through the pipe for heating/cooling.

According to the present invention there is provided a ground energy transfer system with a moving energy transfer fluid for transferring heat between a relatively constant temperature portion of the earth and a building, which system comprises an energy metering means, a means for invoicing, and a pipe, the arrangement being such that, in use, said energy transfer fluid is passed through said pipe for transferring heat between the earth and said building, said energy metering means determines the amount of heat transferred between said relatively constant temperature portion and said building based on a temperature difference between said heat transfer fluid in an input portion of said pipe adjacent one end thereof and in an output portion of said pipe adjacent the other end thereof, and said energy metering means stores electronic data representative of said amount of heat transferred, which data is useable to generate an invoice with said means for invoicing for the quantity of heating and/or cooling of said building provided by said ground energy transfer system.

Further features are set out in claims 2 to 17 to which attention is hereby directed.

According to another aspect of the present invention there is provided a method of transferring heat between a relatively constant temperature portion of the earth and a building with a ground energy transfer system, which method comprises the steps of: -
(a) passing an energy transfer fluid through a pipe to transfer heat between the earth and said building;
(b) with an energy metering means measuring a temperature difference between said energy transfer fluid in an input portion of said pipe adjacent one end thereof and in an output portion of said pipe adjacent the other end thereof;
(c) determining the amount of heat transferred between the earth and said building; and
(d) storing electronic data representative of said amount of heat transferred, which data is used to generate an invoice for the quantity of heating and/or cooling of said building provided by said ground energy transfer system.

Further steps are set out in claims 19 to 21 to which attention is hereby directed.

For a better understanding of the present invention, reference will now be made, by way of example, to the accompanying drawings, in which:
Figure 1 is a schematic view of a first embodiment of a system in accordance with the present invention;
Figure 2 is a schematic view of a second embodiment of a system in accordance with the present invention; and
Figure 3 is a schematic view of a third embodiment of a system in accordance with the present invention.

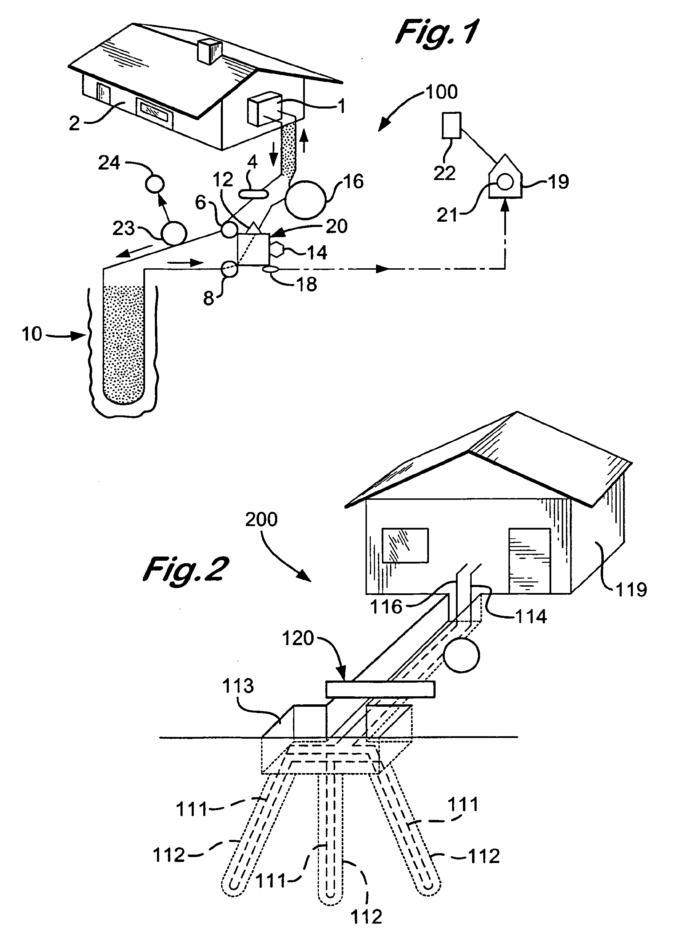

Referring now to Figure 1, there is shown a system 100 according to the present invention, which provides temperature treated fluid to a heating and/or cooling system 1 of a facility 2. The facility may be a factory, commercial building, a residential house, a residential block or any other building, or the like, which may benefit from a stable temperature source and/or energy source. The system 1 may include a heat pump system and/or a water heater within the facility. A pump 4 pumps temperature transfer fluid, for example but not limited to water, from the system 1 to a ground loop temperature transfer system 10 in the earth. A temperature sensor 6 of a metering system 20 measures the temperature of the temperature transfer fluid ("fluid").

The fluid with a changed temperature exits the transfer system 10 flows back to the metering system 20. A temperature sensor 8 of the system 20 senses the temperature of the fluid that has exited from the transfer system 10. A flow sensor 12 measures the volume of fluid flow through the system.

The sensors 6, 8, and 12 are electronically interconnected with a calculator unit 14 of the metering system 20. Signals from the temperature sensors 6 and 8 indicative of fluid temperature are received in, recorded by and processed by the calculator unit 14, as are signals from the flow sensor 12 indicative of flow volume. The calculator unit may be any suitable calculating device or computer. The calculator unit 14 calculates the amount of energy transferred in the transfer system 10, which amount of energy is supplied to a heat pump 16, which is an optional part of the system 1 of the facility 2. In one particular aspect the heat pump 16 is a geothermal heat pump. A transmitter 18 interconnected with the metering system 20 transmits data and/or calculation results from the metering system 20 to another location, for example, but not limited to, a central processing facility 19 that includes appropriate invoice production apparatus 21 that produces an invoice 22 for an end user of the energy, for example the owner or tenant of the facility 2. The invoice may be sent via a computerised communication link, such as via email or on a secure internet site.

Figure 2 shows a system 200 according to the present invention, which has a plurality of wellbores 112; a water inlet pipe 114; and a water outlet pipe 116. The system includes a processing unit (not shown), for example with pump(s), controller(s), a heat exchanger, and a compressor. The processing unit makes heated air or cooled air available to an adjacent facility or building such as a residential home 119. A manifold 113 interconnects heat loops 111 in the wellbores 112.

In one embodiment the wellbores 112 are about two thirds of a metre to one metre (two to three feet) apart at the surface. The length of the pipes 114 and 116 depend on the distance of the facility from the wellbores. Both the systems disclosed in PCT Publication No. WO 99/63282 provide about 3 tons of air conditioning. Typically a 76m (250 foot) wellbore is required for each ton of operating capacity. One 2700Kg (three ton) unit according to this invention has three 76m (250 foot) wellbores each with a 150m (500 foot) (76m (250 feet) down, 76m (250 feet) up) heat loop. The system 200 includes a plurality of loops 111 in wellbores 112. A metering system 120 is like the metering system 20 of Figure 1, and performs the functions of the metering system 20. A heat pump 132 is like the heat pump 116 of Figure 1. As with the system 100, the system 200 can calculate the amount of energy supplied from the loops 111. It is within the scope of this invention to use any suitable ground energy transfer system which is "metered" and "invoiced" as described below, including, but not limited to, loop systems as described herein and including, but not limited to, any ground heat exchange system as described in the prior art cited in this case. In one method according to the present invention using a system, for example but not limited to, like the systems of Figures 1 and 2, an end user of energy produced by the system is billed for the amount of energy provided by or transferred by the system and/or the amount of heat provided to the end user or extracted for the end user. The calculated amount of energy used is manually ascertained from the metering system and/or is transmitted to a main processing apparatus. Any system according to the present invention may use any suitable system, device, or apparatus for extracting heat (including, but not limited to, waste heat) from within a facility to be introduced into an output line that conveys heat transfer fluid to an earth loop system as disclosed herein. Such suitable systems, devices or apparatuses include, but are not limited to, water heating systems, desuperheaters, and known heat exchange apparatuses and systems. Based on a calculated amount, an invoice is produced for the end user.

An optional heat exchange system 23 on the output line from the facility 2 may be used to transfer heat from the heat transfer fluid flowing in the output line to another item 24. The system 23 may be any suitable known heat exchanger or series of heat exchangers. The item 24 may be any suitable heat sink that can receive the heat from the system 23 or any item that can use the heat, including but not limited to an appliance, machine, facility, device, turbine, mass of water (for example in a pool), etc. Thus at least some of the heat extracted from the facility (or substantially all of it) does not flow back into the earth. In certain particular aspects the system 23 is a direct heat exchange system, including, but not limited to a pipe or pipes (for example plastic, metal, or fibreglass) in a mass of water (for example a pond, lake, or pool) or running under pavement.

The system 23 may be located anywhere on the output line between the facility 2 and the loop's input to the earth.

The temperature sensors may be located anywhere on their respective lines, including, but not limited to: at the input and output of the loop system; at the output of the loops system and the point at which the line exits from the facility; and/or at the point at which the loop output line enters the facility and the point at which the loop input line (which is the facility output line) exits from the facility.

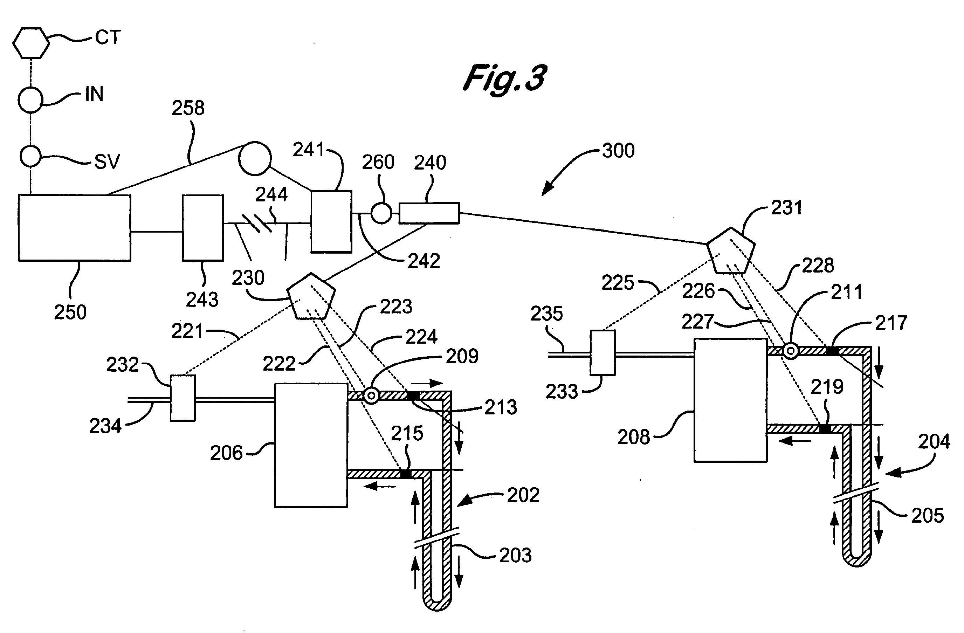

Fig. 3 shows a system 300 according to the present invention which has two ground heat exchange system 202 and 204 which may be any known ground heat exchange system. In one aspect the systems 202, 204 are ground loop systems as any described herein. The system 300 is for a structure, for example a building, such as a restaurant that has a customer area and a kitchen area. The system 202 may provide heat exchange capability for the kitchen area and the typical apparatuses and devices used there, for example appliances, ice machines, etc; and the system 204 may provide heat exchange for a heat/cooling system(s) for the customer area.

In one aspect the system 202 has a heat pump 206 and the system 204 has a heat pump 208, each heat pump disposed in heat exchange relation with a corresponding ground loop (or loops) 203, 205 respectively. Arrows indicate flow direction in the loops.

Each loop 203, 205 has a water flow meter 209, 211, respectively; and two temperature sensor probes 213, 215 and 217, 219, respectively. Via appropriate lines and connections 221, 222, 223, 224 and 225, 226, 227,228, energy meters 230, 231 (optionally with internal batteries for power) communicate with their associated water flow meter 209, 211, temperature sensor probes 213, 215, and kilowatt meters 232, 233, respectively. Each meter may include its own calculating apparatus and signal transmission apparatus for transmitting signals indicative of data and of calculated results. Input AC power (for example typical 460 VAC-3 phase or 230 VAC-3 phase) metered by the meters 232, 233 for running the heat pumps 206, 208 is provided via power lines 234, 235. The meters 232, 233 measure and record the energy being consumed by the heat pump(s) and transmit a signal indicative of this data to the energy meters 230, 231 respectively. The energy meters 230, 231 store this data and further transmit it to the computer 250 upon being queried by the computer 250.

Cables 236, 237 provide communication between the energy meters 230, 231, respectively, and an interface unit 240 with circuitry and devices for "directing traffic", i.e., routing the information flow between the computer 250 and the energy meters 230, 231, between a computer 250 and the energy meters. The interface unit 240 communicates with a modem 241 via a cable 242. The modem 241 communicates with a modem 243 via a telephone line 244. The modem 243, in turn, communicates with a system for example the Internet IN, via the computer 250 and a phone line 258. The interface units and modems may be run on typical 115 VAC-1 phase electrical power, with appropriate transformers as needed. Alternatively, as shown with dotted lines to the left in Figure 3, a server SV communicates with the Internet IN and a customer ST communicates with the Internet IN to query the computer 250 via the server SV. Also, interface unit 240 via an optional computer 260 and the modem 241 can communicate with the Internet IN.

The kilowatt meters 232, 233 measure power to the heat pumps (primarily to their compressors and fans). The energy meters 230, 231 receive inputs from the temperature probes and from the flow meters to calculate kilowatts transferred. The computer collects and records the data from all meters. Optionally, the collected data either from the meters, from the interface units, or from the computer can be sent ("dumped") to a server or other appropriate apparatus, on-site or remote, for example via the Internet to a remote server. This data is, in this way, available for access by anyone with access to the server and, in one aspect, anyone with access to the Internet. In one aspect the temperature probes 215, 219 collect, store, calculate and analyse ("treat") data regarding the temperature of heat transfer fluid (for example water) entering the system. Similarly, the temperature probes 213, 217 treat data regarding the temperature of water exiting the system. The flow meters treat data regarding water flow volume from the flow meters 209, 211 over a time interval (for example, but not limited to, 1, 5, 10 15, 30, 45 or 60 seconds). Calculator apparatus in the energy meters 206, 208 provided with the data from the probes and flow meters, calculate and store data regarding change in energy (energy extracted from or transferred to the heat transfer fluid) due to the change in temperature of a specific volume of water entering and exiting the system in a specific time period. The interface units act as routers allowing the computer 250 (on-site or remote) to query each individual energy meter (via the modems 243, 241 and phone line 244 in one embodiment) regarding its calculations and stored data. The computer 250 may communicate with the interface unit 240 via the Internet IN. Via a connection to another entity or server on the Internet IN, anyone, including but not limited to an owner or manager of the restaurant or an owner of the system 300 can review system performance on an almost-instantaneous basis. Each meter's recorded data output and each sensor probe's recorded data output, as well as any data stored in and any calculations done by the computer will be available for review by various persons and/or related systems via direct access to the computer 250 (for example by phone line or wireless communication) and/or via access via the Internet IN. For example any person, including but not limited to a customer CT such as the restaurant owner, can be provided with a detailed record, for example on the restaurant's or owner's computer monitor screen or in email of the amount of energy used by the heat pump (for example in Btu's, kWh's, therms, calories, etc.); the amount of energy supplied by the electric company; when the energy was consumed; which heat pump 206, 208 consumed the energy; and in which area the energy was consumed. It is to be understood that although the system 300 is described for a restaurant, it is within the scope of this invention to provide such a system for any business or building.

A "facility" herein may be a building. In other aspects it may be but is not limited to, a factory, a machine, or an item or apparatus that needs to be cooled and/or heated.

## Claims

1. A ground energy transfer system (100; 200; 300) with a moving energy transfer fluid for transferring heat between a relatively constant temperature portion of the earth and a building (2), which system comprises an energy metering means (20; 120; 230; 231), a means for invoicing (21), and a pipe (111; 203, 205), the arrangement being such that, in use, said energy transfer fluid is passed through said pipe (111; 203, 205) for transferring heat between the earth and said building (2), said energy metering means (20; 120; 230, 231) determines the amount of heat transferred between said relatively constant temperature portion and said building (2) based on a temperature difference between said energy transfer fluid in an input portion of said pipe (111; 203, 205) adjacent one end thereof and in an output portion of said pipe (111; 203, 205) adjacent the other end thereof, and said energy metering means (20; 120; 230, 231) stores electronic data representative of said amount of heat transferred, which data is useable to generate an invoice with said means for invoicing (21) for the quantity of heating and/or cooling of said building (2) provided by said ground energy transfer system.

2. A ground energy transfer system as claimed in claim 1, wherein said energy metering means (20; 120; 230, 231) further comprises means (12; 209, 211) for measuring a volume of said heat transfer fluid flowing through said pipe (111; 203, 205) per unit time, and outputting a volume signal representative thereof useable in determining the amount of heat transferred.

3. A ground energy transfer system as claimed in claim 1 or 2, further comprising means for calculating a price for the amount of heat transferred.

4. A ground energy transfer system as claimed in claim 1, 2 or 3, further comprising means (18; 241, 243) for transmitting a signal indicative of said electronic data from said energy metering means (20; 120; 230, 231) to a means (21) for invoicing.

5. A ground energy transfer system as claimed in claim 4, wherein said means (21) for invoicing is remote from said energy metering means (20; 120; 230, 231).

6. A ground energy transfer system as claimed in claim 5, wherein said means (21) for invoicing comprises a central processing facility (19) remote from said earth heat exchanger.

7. A ground energy transfer system as claimed in any preceding claim, wherein said energy metering means (20; 120; 230, 231) includes at least two temperature sensors (6, 8; 213, 215, 219), a first for said input portion and a second for said output portion of said pipe (111; 203, 205) respectively, for measuring the temperature of said energy transfer fluid input into said pipe (111; 203, 205) and the temperature of said energy transfer fluid output from said pipe.

8. A ground energy transfer system as claimed in claim 7, wherein in use said first temperature sensor (6; 213; 217) is locatable at a point at which said output portion enters said building (2) and said second temperature sensor (8; 215, 219) is locatable at a point at which said input portion exits from said building (2).

9. A ground energy transfer system as claimed in any preceding claim, further comprising means (23) for diverting heat from said input line.

10. A ground energy transfer system as claimed in claim 9, further comprising means for transferring diverted heat from said input portion to another item (24).

11. A ground energy transfer system as claimed in claim 10, wherein said other item (24) is from the group consisting of a heat sink, a heat using apparatus, and a heater.

12. A ground energy transfer system as claimed in any preceding claim, further comprising a pump (4) for pumping said energy transfer fluid through said pipe (111; 203, 205).

13. A ground energy transfer system as claimed in claim 12, further comprising means for metering power required to drive said pump that, in use, outputs a signal useable by said energy metering means (20; 120; 230, 231) to generate and store electronic data representing said required power.

14. A ground energy transfer system as claimed in any preceding claim, wherein in use said pipe (111; 203, 205) is installed in a wellbore (112) in the earth extending from an earth surface down into said relatively constant temperature portion and a filler material around said pipe (111; 203, 205) in the wellbore, the filler material comprising a gel comprising an amount of water, an amount of a gel material mixed with the water forming a gelled mixture.

15. A ground energy transfer system as claimed in any preceding claim, wherein said pipe (111; 203, 205) comprises a bottom member, said pipe (111; 203, 205) extending down to the bottom member on one side thereof and up from the bottom member on another side thereof, the bottom member comprising a body, a first bore through the body extending from a first opening of the body to a second opening of the body, the first opening and the second opening each sized and configured for receipt therein of an end of said pipe (111; 203, 205), and a second bore having at least one opening on the body, the second bore sized and configured for securement thereat of an end of coil tubing.

16. A ground energy transfer system as claimed in any preceding claim, wherein said pipe is about 150m in length.

17. A ground energy transfer system as claimed in any preceding claim, wherein in use said system is of the closed-loop type.

18. A method of transferring heat between a relatively constant temperature portion of the earth and a building (2) with a ground energy transfer system according to any preceding claim, which method comprises the steps of : -
(a) passing an energy transfer fluid through a pipe (111; 203, 205) to transfer heat between the earth and said building (2);
(b) with an energy metering means (20; 120; 230, 231) measuring a temperature difference between said energy transfer fluid in an input portion of said pipe (111; 203, 205) adjacent one end thereof and in an output portion of said pipe (111; 203, 205) adjacent the other end thereof;
(c) determining the amount of heat transferred between the earth and said building (2); and
(d) storing electronic data representative of said amount of heat transferred, which data is used to generate an invoice for the quantity of heating and/or cooling of said building (2) provided by said ground energy transfer system.

19. A method according to claim 18, further comprising the step of measuring a volume of said heat transfer fluid flowing through said pipe (111; 203, 205) per unit time to said building (2).

20. A method according to claim 18 or 19, further comprising the step of transmitting said electronic data to a means (21) for invoicing.

21. A method according to claim 20, wherein said means (21) for invoicing is remote from said energy metering means (20; 120; 230; 231).

## Patentansprüche

1. Erdenergie-Transportsystem (100; 200; 300) mit einem sich bewegenden Energietransportfluid zum Transportieren von Wärme zwischen einem Bereich der Erde mit verhältnismäßig konstanter Temperatur und einem Gebäude (2), wobei das System Energiemessmittel (20; 120; 230; 231), ein Mittel (21) zum Fakturieren und ein Rohr (111; 203, 205) umfasst, wobei die Anordnung derart ist, dass im Gebrauch das Energietransportfluid durch das Rohr (111; 203, 205) geschickt wird, um Wärme zwischen der Erde und dem Gebäude (2) zu transportieren, wobei die Energiemessmittel (20; 120; 230, 231) die zwischen dem Bereich mit verhältnismäßig konstanter Temperatur und dem Gebäude (2) transportierte Wärmemenge anhand einer Temperaturdifferenz in dem Energietransportfluid zwischen einem Eingangsabschnitt des Rohrs (111; 203, 205) in der Nähe eines Endes hiervon und einem Ausgangsabschnitt des Rohrs (111; 203, 205) in der Nähe des anderen Endes hiervon bestimmen und wobei die Energiemessmittel (20; 120; 230, 231) elektronische Daten speichern, die die transportierte Wärmemenge repräsentieren, wobei die Daten verwendet werden können, um eine Fakturierung mit dem Fakturierungsmittel (21) für die Wärme- und/oder Kühlungsmenge des Gebäudes (2), das durch das Erdenergie-Transportsystem bedient wird, zu erzeugen.

2. Wärmeenergie-Übertragungssystem nach Anspruch 1, wobei die Energiemessmittel (20; 120; 230, 231) ferner Mittel (12; 209, 211) zum Messen eines Volumens des Energietransportfluids, das durch das Rohr (111; 203, 205) pro Einheitszeit strömt, und zum Ausgeben eines hierfür repräsentativen Volumensignals, das bei der Bestimmung der transportierten Wärmemenge verwendbar ist, umfassen.

3. Erdenergie-Transportsystem nach Anspruch 1 oder 2, das ferner Mittel zum Berechnen eines Preises für die transportierte Wärmemenge umfasst.

4. Erdenergie-Transportsystem nach Anspruch 1, 2 oder 3, das ferner Mittel (18; 241, 243) zum Senden eines die elektronischen Daten angebenden Signals von den Energiemessmitteln (20; 120; 230, 231) zu einem Fakturierungsmittel (21) umfasst.

5. Erdenergie-Transportsystem nach Anspruch 4, wobei das Fakturierungsmittel von den Energiemessmitteln (20; 120; 230, 231) entfernt angeordnet ist.

6. Erdenergie-Transportsystem nach Anspruch 5, wobei das Fakturierungsmittel (21) eine zentrale Verarbeitungsanlage (19), die entfernt von dem Erdenergietauscher angeordnet ist, umfasst.

7. Erdenergie-Transportsystem nach einem vorhergehenden Anspruch, wobei die Energiemessmittel (20; 120; 230, 231) wenigstens zwei Temperatursensoren (6, 8; 213, 215, 219) enthalten, einen ersten Sensor für den Eingangsabschnitt und einen zweiten Sensor für den Ausgangsabschnitt des Rohrs (111; 203, 205), um die Temperatur des in das Rohr (111; 203, 205) eingegebenen Energietransportfluids und die Temperatur des von dem Rohr ausgegebenen Energietransportfluids zu messen.

8. Erdenergie-Transportsystem nach Anspruch 7, wobei im Gebrauch der erste Temperatursensor (6; 213; 217) an einem Punkt angeordnet sein kann, an dem der Ausgangsabschnitt in das Gebäude (2) eintritt, und der zweite Temperatursensor (8; 215, 219) an einem Punkt angeordnet sein kann, an dem der Eingangsabschnitt aus dem Gebäude (2) austritt.

9. Erdenergie-Transportsystem nach einem vorhergehenden Anspruch, das ferner Mittel (23) zum Aufteilen von Wärme von der Eingangsleitung umfasst.

10. Erdenergie-Transportsystem nach Anspruch 9, das ferner Mittel zum Transportieren aufgeteilter Wärme von dem Eingangsabschnitt zu einem anderen Punkt (24) umfasst.

11. Erdenergie-Transportsystem nach Anspruch 10, wobei der andere Punkt (24) aus der Gruppe ausgewählt ist, die aus einer Wärmesenke, einer Wärme verwendenden Vorrichtung und einer Heizeinrichtung besteht.

12. Erdenergie-Transportsystem nach einem vorhergehenden Anspruch, das ferner eine Pumpe (4) umfasst, um das Energietransportfluid durch das Rohr (111; 203, 205) zu pumpen.

13. Erdenergie-Transportsystem nach Anspruch 12, das ferner Mittel umfasst, um die zum Antreiben der Pumpe erforderliche Leistung zu messen, die im Gebrauch ein Signal ausgeben, das die Energiemessmittel (20; 120; 230, 231) verwenden können, um elektronische Daten, die die erforderliche Leistung repräsentieren, zu erzeugen und zu speichern.

14. Erdenergie-Transportsystem nach einem vorhergehenden Anspruch, wobei im Gebrauch das Rohr (111; 203, 205) in einem Bohrloch (112) in der Erde installiert ist, das sich von einer Erdoberfläche nach unten in einen Bereich mit verhältnismäßig konstanter Temperatur erstreckt, wobei um das Rohr (111; 203, 205) in dem Bohrloch Füllmaterial vorhanden ist, wobei das Füllmaterial ein Gel enthält, das eine Menge an Wasser enthält, wobei eine Menge an Gelmaterial mit dem Wasser gemischt ist und ein geliertes Gemisch bildet.

15. Erdenergie-Transportsystem nach einem vorhergehenden Anspruch, wobei das Rohr (111; 203, 205) ein Bodenelement umfasst, wobei sich das Rohr (111; 203, 205) nach unten zu dem Bodenelement auf einer Seite hiervon erstreckt und sich von dem Bodenelement nach oben auf einer anderen Seite hiervon erstreckt, wobei das Bodenelement einen Körper, eine erste Bohrung durch den Körper, die sich von einer ersten Öffnung des Körpers zu einer zweiten Öffnung des Körpers erstreckt, wobei die erste Öffnung und die zweite Öffnung jeweils so bemessen und konfiguriert sind, dass sie darin ein Ende des Rohrs (111; 203, 205) aufnehmen, und eine zweite Bohrung mit wenigstens einer Öffnung in dem Körper umfasst, wobei die zweite Bohrung so bemessen und konfiguriert ist, dass daran ein Ende eines Wendelrohrs befestigt werden kann.

16. Erdenergie-Transportsystem nach einem vorhergehenden Anspruch, wobei das Rohr eine Länge von etwa 150 m hat.

17. Erdenergie-Transportsystem nach einem vorhergehenden Anspruch, wobei im Gebrauch das System vom Typ mit geschlossener Schleife ist.

18. Verfahren zum Transportieren von Wärme zwischen einem Bereich der Erde mit verhältnismäßig konstanter Temperatur und einem Gebäude (2) mit einem Erdenergie-Transportsystem nach einem vorhergehenden Anspruch, wobei das Verfahren die folgenden Schritte umfasst:
(a) Schicken eines Energietransportfluids durch ein Rohr (111; 203, 205), um Wärme zwischen der Erde und dem Gebäude (2) zu transportieren;
(b) wobei ein Energiemessmittel (20; 120; 230, 231) eine Temperaturdifferenz in dem Energietransportfluid zwischen einem Eingangsabschnitt des Rohrs (111; 203, 205) in der Nähe eines Endes hiervon und einem Ausgangsabschnitt des Rohrs (111; 203, 205) in der Nähe des anderen Endes hiervon misst;
(c) Bestimmen der zwischen der Erde und dem Gebäude (2) transportierten Wärmemenge; und
(d) Speichern elektronischer Daten, die die transportierte Wärmemenge repräsentieren, wobei die Daten verwendet werden, um eine Fakturierung für die Wärme- und/oder Kühlungsmenge des Gebäudes (2), die durch das Erdenergie-Transportsystem bereitgestellt wird, zu erzeugen.

19. Verfahren nach Anspruch 18, das ferner den Schritt des Messens eines Volumens des durch das Rohr (111; 203, 205) pro Einheitszeit zu dem Gebäude (2) strömenden Energietransportfluids umfasst.

20. Verfahren nach Anspruch 18 oder 19, das ferner den Schritt des Sendens der elektronischen Daten zu einem Fakturierungsmittel (21) umfasst.

21. Verfahren nach Anspruch 20, wobei das Fakturierungsmittel (21) entfernt von den Energiemessmitteln (20; 120; 230; 231) angeordnet ist.

## Revendications

1. Système de transfert d'énergie géothermique (100 ; 200; 300) comportant un fluide de transfert d'énergie mobile pour transférer de la chaleur entre une partie de la terre à température relativement constante et un immeuble (2), lequel système comporte des moyens de mesure d'énergie (20 ; 120 ; 230 ; 231), des moyens de facturation (21), et une conduite (111 ; 203 ; 205), l'agencement étant tel que, en fonctionnement, ledit fluide de transfert d'énergie passe à travers ladite conduite (111 ; 203 ; 205) pour transférer de la chaleur entre la terre et ledit immeuble (2), lesdits moyens de mesure d'énergie (20 ; 120 ; 230 ; 231) déterminent la quantité de chaleur transférée entre ladite partie à température relativement constante et ledit immeuble (2) sur la base d'une différence de température entre ledit fluide de transfert d'énergie dans une partie d'entrée de ladite conduite (111 ; 203 ; 205) adjacente à l'une de ses extrémités et dans une partie de sortie de ladite conduite (111 ; 203 ; 205) adjacente à l'autre de ses extrémités, et lesdits moyens de mesure d'énergie (20, 120 ; 230 ; 231) enregistrent des données électroniques représentatives de ladite quantité de chaleur transférée, lesquelles données peuvent être utilisées pour générer une facture par l'intermédiaire desdits moyens de facturation (21) concernant la quantité de chaleur et/ou de froid fournie audit immeuble (2) par ledit système de transfert d'énergie géothermique.

2. Système de transfert d'énergie géothermique selon la revendication 1, dans lequel lesdits moyens de mesure d'énergie (20 ; 120 ; 230 ; 231) comportent, de plus, des moyens (12 ; 209 ; 211) pour mesurer un volume dudit fluide de transfert de chaleur circulant à travers ladite conduite (111 ; 203 ; 205) par unité de temps, et pour délivrer un signal de volume représentatif de ce volume pouvant être utilisé pour la détermination de la quantité de chaleur transférée.

3. Système de transfert d'énergie géothermique selon la revendication 1 ou 2, comprenant, de plus, des moyens pour calculer un prix concernant la quantité de chaleur transférée.

4. Système de transfert d'énergie géothermique selon la revendication 1, 2 ou 3, comprenant, des moyens (18 ; 241; 243) pour transmettre un signal indicateur desdites données électroniques provenant desdits moyens de mesure d'énergie (20 ; 120 ; 230 ; 231) à des moyens (21) de facturation.

5. Système de transfert d'énergie géothermique selon la revendication 4, dans lequel lesdits moyens (21) servant à la facturation sont éloignés desdits moyens de mesure d'énergie (20 ; 120 ; 230 ; 231).

6. Système de transfert d'énergie géothermique selon la revendication 5, dans lequel lesdits moyens (21) de facturation comportent une installation de traitement centrale (19) distante dudit échangeur de chaleur géothermique.

7. Système de transfert d'énergie géothermique selon l'une quelconque des revendications précédentes, dans lequel lesdits moyens de mesure d'énergie (20 ; 120 ; 230; 231) comportent au moins deux palpeurs de température (6, 8 ; 213, 215, 219), un premier palpeur destiné à ladite partie d'entrée et un second palpeur destiné à ladite partie de sortie de ladite conduite (111; 203; 205) respectivement, pour mesurer la température de ladite entrée de fluide de transfert d'énergie dans ladite conduite (111 ; 203 ; 205) et la température de ladite sortie de fluide de transfert d'énergie venant de ladite conduite.

8. Système de transfert d'énergie géothermique selon la revendication 7, dans lequel, en fonctionnement, ledit premier palpeur de température (6 ; 213 ; 217) peut être placée en un point au niveau duquel ladite partie de sortie entre dans ledit immeuble (2) et ledit second palpeur de température (8 ; 215 ; 219) peut être placé en un point au niveau duquel ladite partie d'entrée sort dudit immeuble (2).

9. Système de transfert d'énergie géothermique selon l'une quelconque des revendications précédentes, comprenant, de plus, des moyens (23) pour dévier la chaleur à partir de ladite ligne d'entrée.

10. Système de transfert d'énergie géothermique selon la revendication 9, comprenant, de plus, des moyens pour transférer la chaleur détournée de ladite partie d'entrée vers un autre point de réception (24).

11. Système de transfert d'énergie géothermique selon la revendication 10, dans lequel ledit autre point de réception (24) se situe dans le groupe constitué d'un puits thermique, d'un appareil utilisateur de chaleur, et d'un élément chauffant.

12. Système de transfert d'énergie géothermique selon l'une quelconque des revendications précédentes comprenant, de plus, une pompe (4) pour pomper ledit fluide de transfert d'énergie à travers ladite conduite (111 ; 230, 205).

13. Système de transfert d'énergie géothermique selon la revendication 12, comportant, de plus, des moyens pour mesurer la puissance requise pour commander ladite pompe qui, en fonctionnement, délivre un signal pouvant être utilisé par lesdits moyens de mesure d'énergie (20 ; 120; 230; 231) pour générer et stocker des données électroniques représentant ladite puissance requise.

14. Système de transfert d'énergie géothermique selon l'une quelconque des revendications précédentes, dans lequel, en fonctionnement, ladite conduite (111 ; 230; 205) est installée dans un puits (112) creusé dans la formation géologique s'étendant à partir de la surface de la terre en profondeur vers ladite partie à température relativement constante et un matériau de remplissage autour de ladite conduite (111 ; 203, 205) dans le puits, le matériau de remplissage comprenant un gel comportant une quantité d'eau, une quantité de matériau en gel mélangée avec l'eau constituant un mélange gélifié.

15. Système de transfert d'énergie géothermique selon l'une quelconque des revendications précédentes, dans lequel ladite conduite (111 ; 203, 205) comporte un élément inférieur, ladite conduite (111 ; 203 ; 205) descendant vers l'élément inférieur sur l'un de ses côté et remontant à partir de l'élément inférieur sur l'autre de ses côtés, l'élément inférieur comportant un corps, un premier alésage à travers le corps s'étendant d'une première ouverture du corps vers une seconde ouverture du corps, la première ouverture et la seconde ouverture étant chacune dimensionnée et configurée de façon à y recevoir une extrémité de ladite conduite (111 ; 203; 205), et un second alésage présentant au moins une ouverture sur le corps, le second alésage étant dimensionné et configuré pour y fixer une extrémité d'un tubage en hélice.

16. Système de transfert d'énergie géothermique selon l'une quelconque des revendications précédentes, dans lequel ladite conduite est longue de 150 m environ.

17. Système de transfert d'énergie géothermique selon l'une quelconque des revendications précédentes, dans lequel, en fonctionnement, ledit système est du type à boucle fermée.

18. Procédé de transfert de chaleur entre une partie de la terre à température relativement constante et un immeuble (2)comportant le système de transfert d'énergie géothermique selon l'une quelconque des revendications précédentes, lequel procédé comprend les étapes consistant à :
(a) faire passer un fluide de transfert d'énergie à travers une conduite (111 ; 203, 205) pour transférer de la chaleur entre la terre et ledit immeuble (2) ;
(b) avec des moyens de mesure d'énergie (20 ; 120; 230, 231), mesurer une différence de températures entre ledit fluide de transfert d'énergie dans une partie d'entrée de ladite conduite (111 ; 203, 205) adjacente à l'une de ses extrémités et dans une partie de sortie de ladite conduite (111 ; 203, 205) adjacente à l'autre de ses extrémités ;
(c) déterminer la quantité de chaleur transférée entre la formation géologique et ledit immeuble (2) ; et
(d) enregistrer des données électroniques représentatives de ladite quantité de chaleur transférée, lesquelles données sont utilisées pour générer une facture concernant la quantité de chaleur et/ou de froid fournie audit immeuble (2) par ledit système de transfert d'énergie géothermique.

19. Procédé selon la revendication 18, comprenant, de plus, l'étape consistant à mesurer un volume dudit fluide de transfert de chaleur circulant à travers ladite canalisation (111 ; 230, 205) par unité de temps à destination dudit immeuble (2).

20. Procédé selon la revendication 18 ou 19, comprenant de plus l'étape consistant à transmettre lesdites données électroniques à des moyens (21) de facturation.

21. Procédé selon la revendication 20, dans lequel lesdits moyens (21) permettant une facturation sont placés à distance desdits moyens de mesure d'énergie (20; 120 ; 230, 231).
